# EUROPÄISCHE PATENTSCHRIFT

(11) **EP 1 150 557 B1**
(45) Veröffentlichungstag und Bekanntmachung des Hinweises auf die Patenterteilung: **11.08.2004**
(21) Anmeldenummer: 00979247.4
(22) Anmeldetag: 05.12.2000
(51) Int. Cl.: A01C 7/04

(54) **EINZELKORNSÄMASCHINE**
MACHINE FOR SOWING INDIVIDUAL SEED GRAINS
MACHINE PERMETTANT DE SEMER DES GRAINS DE SEMENCE INDIVIDUELS

(30) Priorität: 06.12.1999 AT 205099
(43) Veröffentlichungstag der Anmeldung: 07.11.2001
(73) Patentinhaber: Wintersteiger G.m.b.H., 4910 Ried im Innkreis (AT)
(72) Erfinder: SPIESBERGER, Franz, A-4923 Lohnsburg (AT)
(74) Vertreter: Hübscher, Helmut, Dipl.-Ing.
(86) Internationale Anmeldenummer: PCT/AT2000/000327
(87) Internationale Veröffentlichungsnummer: WO 2001/041553

(56) Entgegenhaltungen:
- EP-A- 0 195 900
- DE-A- 3 418 551

## Beschreibung

### Technisches Gebiet

Die Erfindung bezieht sich auf eine Einzelkornsämaschine mit wenigstens einem gegen eine vertikale Säscheibe offenen Saatgutbehälter, wobei die Säscheibe aus einem feststehenden, auf der dem Saatgutbehälter abgekehrten Seite besaugten Scheibenkörper mit zumindest einem Führungsschlitz und aus einer auf der Seite des Saatgutbehälters am Scheibenkörper anliegenden, antreibbaren Förderscheibe mit über den Umfang verteilten, sich über den radialen Erstrekkungsbereich des Führungsschlitzes erstreckenden Mitnehmerschlitzen besteht, die im Überdeckungsbereich mit dem Führungsschlitz Ansaugöffnungen für die entlang des Führungsschlitzes aus dem Saatgutbehälter austragbaren Saatkörner bilden.

### Stand der Technik

Um eine sichere Vereinzelung von Saatkörnern und eine gleichmäßige Austragung der vereinzelten Saatkörner zu erreichen, ist es bei Einzelkornsämaschinen bekannt (DE 31 03 101 C2, DE 34 18 551 A1, US 4 896 616 A), die Säscheibe in einen feststehenden Scheibenkörper und eine an diesem Scheibenkörper anliegende Förderscheibe zu unterteilen, die mit radialen Mitnehmerschlitzen versehen ist. Da der Scheibenkörper mit einer sich über einen Umfangsbereich erstreckenden, eine Austragsbahn für die Saatkörner bildenden Führungsschlitz versehen ist, der auf der von der Förderscheibe abgekehrten Seite besaugt wird, ergeben sich im Überdeckungsbereich der Mitnehmerschlitze mit dem Führungsschlitz Ansaugöffnungen für die Saatkörner, die entlang des Führungsschlitzes aus dem an die Säscheibe angeschlossenen Saatgutbehälter ausgetragen werden. Die an die Ansaugöffnungen angesaugten Saatkörner kommen dabei sowohl mit dem feststehenden Scheibenkörper als auch mit der drehenden Förderscheibe in Berührung, was zu einer Drehung der angesaugten Saatkörner mit der Wirkung führt, daß eines der an eine Ansaugöffnung angesaugten Saatkörner unter einer Verdrängung der übrigen Saatkörner die Ansaugöffnung abdeckt, während die übrigen Saatkörner in den Saatgutbehälter zurückfallen. Da die angesaugten Saatkörner aufgrund ihrer Drehung dazu neigen, in die Ansaugöffnungen tiefer eingezogen zu werden, muß mit einer zum Teil ungleichmäßigen Ablösung der vereinzelten Saatkörner von der Säscheibe am Ende des Führungsschlitzes gerechnet werden. Damit diese ungleichmäßige Kornablösung nicht zu ungleichmäßigen Legeabständen der Einzelkomsämaschine führen kann, wird ein mit der Förderscheibe umlaufendes Zellenrad vorgesehen, das für einen von der Kornablösung unabhängigen Zwangsaustrag in vorgegebenen Abständen sorgt. Außerdem ist die Austragsgeschwindigkeit und damit die Säleistung solcher Einzelkornsämaschinen aufgrund des eine Komdrehung erfordernden Vereinzelungsvorganges beschränkt.

### Darstellung der Erfindung

Der Erfindung liegt somit die Aufgabe zugrunde, eine Einzelkornsämaschine der eingangs geschilderten Art so auszugestalten, daß die Austragsgeschwindigkeit der vereinzelten Saatkörner erheblich gesteigert werden kann, ohne auf eine sichere Vereinzelung verzichten zu müssen, und zwar auch bei Saatkörnern mit vergleichsweise großen Abmessungsunterschieden.

Die Erfindung löst die gestellte Aufgabe dadurch, daß die Schlitzränder der Mitnehmerschlitze einen wellenartigen Verlauf aufweisen, so daß sich die Winkel zwischen den Längsrändern der Mitnehmerschlitze und des Führungsschlitzes im Überdeckungsbereich dieser Schlitze zumindest auf einer Schlitzseite entlang des Führungsschlitzes innerhalb eines vorgegebenen Winkelbereiches wiederholt im Sinne einer Vergrößerung und Verkleinerung ändern.

Da sich der Winkel zwischen den die Ansaugöffnungen begrenzenden Längsrändern der Mitnehmerschlitze und des Führungsschlitzes aufgrund der gewellten Schlitzränder bei einer Drehung der Förderscheibe wiederholt ändert, werden über die Längsränder der einander kreuzenden Schlitze die angesaugten Saatkörner im Bereich der Ansaugöffnungen zusätzlich hin- und hergedreht, was die Vereinzelungswirkung erheblich unterstützt. Die verbesserte Vereinzelung der Saatkörner bringt die angestrebte Leistungssteigerung mit sich, weil auch bei höheren Umlaufgeschwindigkeiten der Förderscheibe die Saatkörner sicher vereinzelt werden, und zwar unabhängig von allfälligen Größenunterschieden der Saatkörner. Die durch den Längsrandverlauf der Schlitze im Bereich der Ansaugöffnungen bedingte Drehmitnahme der angesaugten Saatkörner ist ja unabhängig von der Korngröße.

Die Amplituden und Längen der Wellen der Schlitzränder werden vorteilhaft in Abhängigkeit vom auszusäenden Saatgut gewählt. Die Schlitzränder können außerdem zur Bildung des wellenartigen Verlaufes mit randseitigen Vertiefungen versehen werden, über die auf die Saatkörner eine zusätzliche Bewegung senkrecht zur Säscheibe ausgeübt werden kann, was den Vereinzelungsvorgang unterstützt.

Besonders vorteilhafte Austragsverhaltnisse ergeben sich für das Saatgut, wenn der Führungsschlitz im Scheibenkörper eine geringere Breite als die Mitnehmerschlitze in der Förderscheibe aufweisen. Diese Maßnahme ermöglicht bei einer ausreichenden Breite der Mitnehmerschlitze eine flache Anlage der Saatkörner am Scheibenkörper zwischen den Längsrändern der Mitnehmerschlitze, wodurch die Neigung der Saatkörner, tiefer in den Führungsschlitz einzudringen, weitgehend unterdrückt werden kann. Der Führungsschlitz kann ja in diesem Fall entsprechend schmal ausgebildet werden. Mit den sich flach an die Säscheibe anlegenden Saatkörnern wird das Ablösen der Saatkörner von der Säscheibe erleichtert, wenn die Saatkörner aus dem besaugten Bereich des Führungsschlitzes gelangen und dann von der Säscheibe abfallen, so daß mit einer ausreichend begrenzten Ablösestelle der Saatkörner von der Säscheibe gerechnet werden kann. Damit sind aber alle Voraussetzungen gegeben, um auf ein Zellenrad zur Vergleichmäßigung des Saatgutaustrages verzichten zu können. Dies gilt insbesondere dann, wenn der Führungsschlitz im Bereich eines abwarts gerichteten Austragsendes unbesaugt bleibt, weil dieses unbesaugte Austragsende des Führungsschlitzes eine zusätzliche Führungshilfe für die sich von der Säscheibe losenden Saatkörner bildet.

Um die Saatgutaustragung trotz einer von der Fahrgeschwindigkeit der Einzelkornsämaschine abhangigen Drehung der Förderscheibe sicher unterbrechen zu konnen, kann im Bereich eines vom Bodenbereich des Saatgutbehälters aufsteigenden Abschnittes des Führungsschlitzes wenigstens eine gegen den Führungsschlitz gerichtete Blasdüse vorgesehen sein, die bei ihrer Beaufschlagung mit Druckluft die allenfalls noch nach einer Abschaltung der Saugbeaufschlagung des Führungsschlitzes mit der Förderscheibe mitgenommenen Saatkörner von der Säscheibe zurück in den Saatgutbehälter abbläst. Während die Beaufschlagung des Führungsschlitzes im Abschnitt unterhalb der Blasdüse unterbrochen wird, bleibt die Besaugung des Führungsschlitzes im an die Blasdüse anschließenden Abschnitt zumindest bis zum Austrag des letzten, noch nicht von der Säscheibe abgeblasenen Saatkornes aufrecht

### Kurze Beschreibung der Zeichnungen

In der Zeichnung ist der Erfindungsgegenstand beispielsweise dargestellt. Es zeigen
- Fig. 1: eine erfindungsgemäße Einzelkornsamaschine ausschnittsweise im Bereich der Säscheiben in einem vereinfachten Axialschnitt,
- Fig. 2: eine Säscheibe in einer stirnseitigen Ansicht von der Seite des Saatgutbehälters her in einem größeren Maßstab,

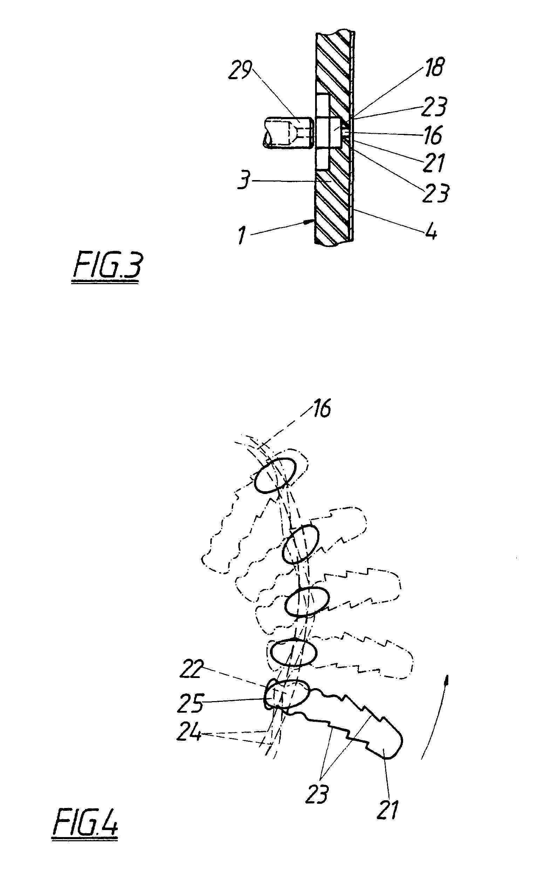

- Fig. 3: einen Schnitt nach der Linie III-III der Fig. 2,
- Fig. 4: eine schematische Darstellung der Ausförderung eines Saatkornes entlang des Führungsschlitzes anhand mehrerer aufeinanderfolgender Drehlagen eines Mitnehmerschlitzes,
- Fig. 5: eine Konstruktionsvariante eines Mitnehmerschlitzes der Förderscheibe in einer Draufsicht und
- Fig. 6: einen Schnitt nach der Linie VI-VI der Fig. 5. in einem größeren Maßstab

### Bester Weg zur Ausführung der Erfindung

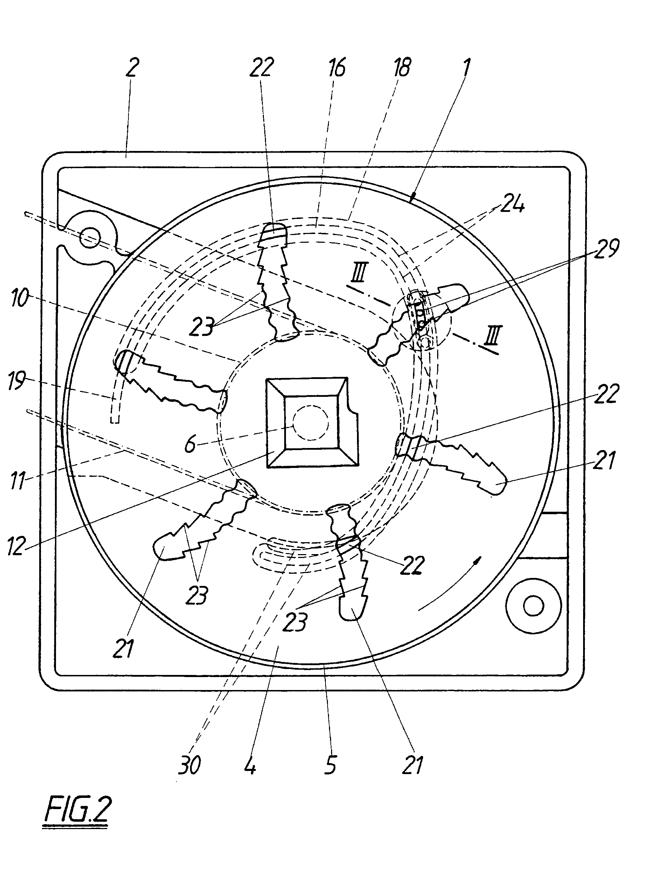

Die Einzelkomsamaschine gemäß dem dargestellten Ausführungsbeispiel weist zwei spiegelbildlich angeordnete Sascheiben 1 auf, die in einem Gestell 2 gelagert sind. Diese Säscheiben 1 setzen sich jeweils aus einem Scheibenkörper 3 und einer an diesem Scheibenkörper 3 anliegenden Förderscheibe 4 zusammen. Während die Scheibenkörper 3 drehfest in kreiszylindrischen Aufnahmen 5 des Gestells 2 drehfest gehalten werden, sind die Förderscheiben 4 auf einer Antriebswelle 6 gelagert, die das Gestell 2 durchsetzt und in Wälzlagern 7 gehalten ist. An einer Stirnseite trägt die Antriebswelle 6 einen Anschlußtopf 8, der das vom Gestell 2 gebildete, rohrförmige Lagergehäuse 9 umgreift und ein Kettenrad 10 für einen Kettentneb 11 (Fig. 2) aufweist Der Boden des Anschlußtopfes 8 bildet außerdem einen Aufnahmekopf 12 für die Förderscheibe 4 der einen Säscheibe 1. Fur die Förderscheibe 4 der gegenüberliegenden Säscheibe 1 ist an der Antriebswelle 6 ein analoger Aufnahmekopf 13 festgeschraubt Die im Querschnitt viereckigen Aufnahmeköpfe 12 und 13 ragen axial in Saatgutbehälter 14 vor, die auf beiden Seiten des Gestells 2 angeschlossen sind und dicht an den Förderscheiben 4 anliegen, so daß die Säscheiben 1 die Rückwände der Saatgutbehälter 14 bilden. Über absperrbare Zulaufkanäle 15 stehen die Saatgutbehälter 14 mit Vorratsbehältern in Verbindung, aus denen das Saatgut in die Saatgutbehälter 14 gelangt, wobei das Saatgut aufgrund der Neigung der Wände der Saatgutbehälter 14 im Bereich der Säscheiben 1 zu liegen kommt. Die in die Saatgutbehälter 14 vorstehenden Aufnahmekopfe 12 und 13 sorgen dabei für eine Rührbewegung, die eine Brückenbildung des Saatgutes im Zulaufbereich unterbindet.

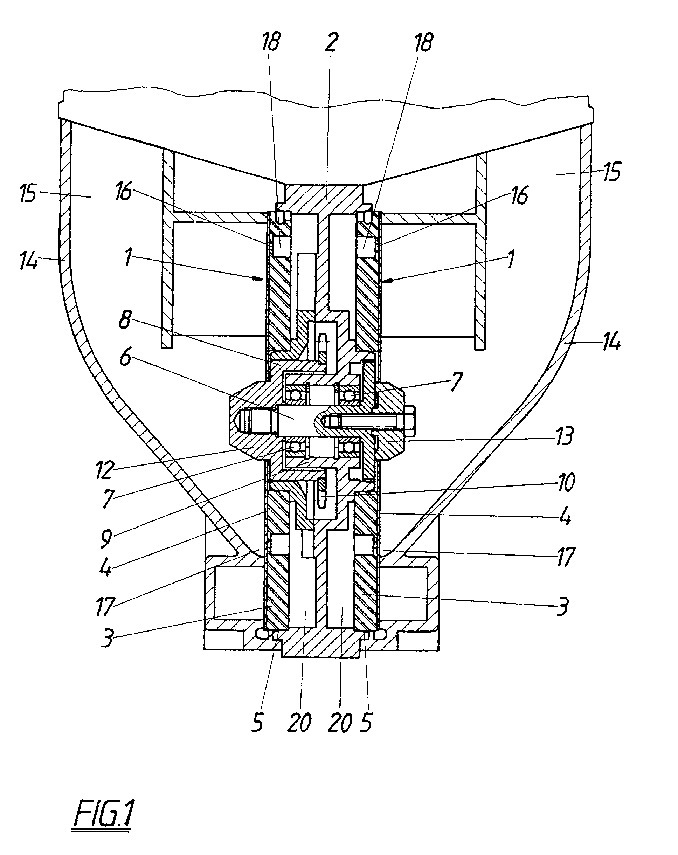

Die Scheibenkörper 3 der Säscheiben 1 bilden einen Führungsschlitz 16, der vom Bodenbereich 17 des angeschlossenen Saatgutbehälters 14 (Fig. 1) entlang einer Kurve verlauft, die sich im Drehsinn der Förderscheibe 4 über einen Umfangsbereich von angenähert 270° erstreckt, wie dies der Fig. 2 entnommen werden kann.. Diese Führungsschlitze 16 öffnen sich gegen den anschließenden Teil des Gestells 2 hin in einer verbreiterten Nut 18, die jedoch vor dem abwärts gerichteten Austragsende 19 des Führungsschlitzes 16 endet. Das Gestell 2 bildet voneinander getrennte, durch die Scheibenkörper 3 der Säscheiben 1 abgedeckte Saugkammern 20, die mit einem Sauggebläse verbunden sind, so daß die Führungsschlitze 16 der Scheibenkörper 3 der beiden Säscheiben 1 voneinander unabhangig besaugt werden können.

Die Förderscheiben 4 der Säscheiben 1 sind mit gleichmäßig über den Umfang verteilten, im wesentlichen radial verlaufenden Mitnehmerschlitzen 21 versehen, die sich über den radialen Erstreckungsbereich des Führungsschlitzes 16 erstrecken und im Überdeckungsbereich mit dem Führungsschlitz 16 Ansaugöffnungen 22 bilden. An die Ansaugöffnungen 22, die durch die einander kreuzenden Schlitze 16 und 21 begrenzt werden, werden die Saatkörner angesaugt, die dann aufgrund der Drehung der Förderscheibe 4 entlang des Führungsschlitzes 16 nach oben aus dem jeweiligen Saatgutbehälter 14 ausgetragen und im Bereich des abwärts gerichteten Austragsendes 19 des Führungsschlitzes 16 außerhalb des Saatgutbehälters 14 abgeworfen zu werden.

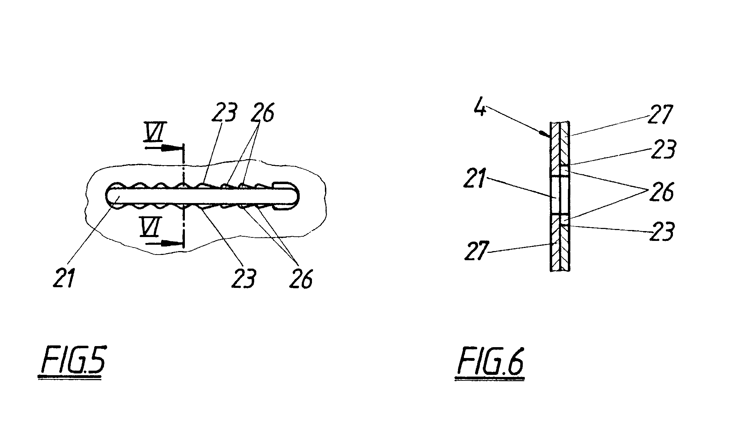

Zum Unterschied von bekannten Säscheiben dieser Art sind die Längsränder 23 der Mitnehmerschlitze 21 in den Förderscheiben 4 gewellt ausgebildet, so daß sich die Winkel zwischen diesen Längsrändern 23 einerseits und den Längsrändern 24 des Führungsschlitzes 16 anderseits im Bereich der Ansaugbffnungen 22 ändern, wenn sich der Führungsschlitz 16 während der Drehung der Forderscheibe 4 in radialer Richtung gegenüber den Mitnehmerschlitzen 21 bewegt. Dies hat zur Folge, daß ein an eine Ansaugöffnung 22 angesaugtes Saatkorn 25 gemäß der Fig. 4 vom gewellten Längsrand 23 der Mitnehmerschlitze 21 wiederholt hin- und hergedreht wird, wenn es entlang des Führungsschlitzes 16 aus dem Saatgutbehälter 14 ausgetragen wird. Diese hin- und hergehende Drehbewegung unterstützt die Vereinzelung der Saatkorner 25, weil allenfalls zusätzlich angesaugte Saatkörner durch das eine sich drehende Saatkorn 25 verdrängt werden und in den Saatgutbehälter 14 zurückfallen. Da die Breite der Mitnehmerschlitze 21 erheblich größer als die Breite des Führungsschlitzes 16 gewählt ist, können sich die angesaugten Saatkörner 25 zwischen den Längsrändern 23 der Mitnehmerschlitze 21 vorteilhaft an den Scheibenkörper 3 anlegen, so daß ein tieferes Eindringen der Saatkörner in die Ansaugöffnungen 22 weitgehend unterbunden werden kann. Diese Anlage der angesaugten Saatkorner 25 am Scheibenkörper 3 ist nicht nur für die Verdrehung der Saatkörner vorteilhaft, sondern verbessert auch die Ablösebedingungen im Bereich des Austragsendes 19 des Führungsschlitzes 16, was sonst unter Umstanden erforderliche Zellenräder für ein gleichmäßiges Austragen der vereinzelten Saatkörner unnötig macht. Wie in der Fig. 4 strichpunktiert angedeutet ist, kann auch der Führungsschlitz 16 mit wellenartig verlaufenden Längsrändern versehen werden, um eine zusätzliche Relativbewegung zwischen den Schlitzen 16 und 21 zu erreichen. Durch diese Maßnahme kann die Vereinzelungswirkung zusätzlich verbessert werden.

Gemäß den Fig. 2 und 4 sind die Längsränder 23 der Mitnehmerschlitze 21 über die gesamte Dicke der Förderscheiben 4 gewellt ausgebildet. Dies ist jedoch nicht zwingend erforderlich. So könnte die Wellung der Längsränder 23 der Mitnehmerschlitze 21 auch bloß durch randseitige Vertiefungen 26 erreicht werden, wie dies in den Fig. 5 und 6 dargestellt ist. Damit diese Vertiefungen 26 einfach hergestellt werden können, können die Förderscheiben 4 aus zwei Teilscheiben 27 und 28 aufgebaut sein, von denen die eine dem Saatgutbehälter 14 zugekehrte Teilscheibe 27 Schlitze mit dem gewellten Randverlauf 23 aufweist, während die andere Teilscheibe 28 Schlitze mit einem glatten Randverlauf bildet.

Damit der Saatgutaustrag unterbrochen werden kann, ohne den Antrieb der Förderscheiben 4 unterbrechen zu müssen, wird im allgemeinen die Saugbeaufschlagung des Führungsschlitzes 16 weggeschaltet. Zusätzlich können im Bereich eines vom Bodenbereich 17 des Saatgutbehälters 14 aufsteigenden Abschnittes des Führungsschlitzes 16 gegen den Führungsschlitz 16 hin gerichtete Blasdüsen 29 vorgesehen sein, und zwar vorteilhaft im Bereich einer die Besaugung des Führungsschlitzes 16 in zwei Abschnitte unterteilenden Trennwand. Werden die Blasdüsen 29 mit Druckluft beaufschlagt, so werden die trotz einer Unterbrechung der Saugbeaufschlagung des Führungsschlitzes bis zu ihnen aus dem Saatgutbehälter 14 ausgetragenen Saatkörner von der Säscheibe 1 in den Saatgutbehälter 14 zurückgeblasen. Die Saatkörner, die sich bereits in dem Führungsschlitzabschnitt außerhalb der Blasdüsen 29 befinden, werden jedoch noch ordnungsgemäß ausgetragen, weil die Saugbeaufschlagung des Führungsschlitzes 16 außerhalb der Blasdüsen 29 nicht unterbrochen wird. Der Übergang von einem zum anderen Saugabschnitt des Führungsschlitzes 16 muß selbstverständlich so gestaltet werden, daß bei einer Abschaltung der Blasdüsen 29 die Ansaugung der Saatkörner im Übergangsbereich nicht unterbrochen wird.

Damit im Bodenbereich 17 der Saatgutbehälter 14 zumindest ein Saatkorn an die Säscheiben 1 angesaugt wird, solange sich noch ein Saatkorn im Saatgutbehälter 14 befindet, kann in vorteilhafter Weise für eine Vergrößerung des Ansaugbereiches im Bodenbereich 17 gesorgt werden. Dies kann durch eine entsprechende Verbreiterung des Führungsschlitzes 16 geschehen. Gemäß der Fig. 2 ist hiefür eine Verzweigung des Führungsschlitzes 16 in zwei Äste 30 vorgesehen, von denen einer durch eine zusätzliche Nut im Scheibenkörper 3 gebildet wird.

## Patentansprüche

1. Einzelkornsämaschine mit wenigstens einem gegen eine vertikale Säscheibe (1) offenen Saatgutbehälter (14), wobei die Säscheibe (1) aus einem feststehenden, auf der dem Saatgutbehälter (14) abgekehrten Seite besaugten Scheibenkörper (3) mit zumindest einem Führungsschlitz (16) und aus einer auf der Seite des Saatgutbehälters (14) am Scheibenkörper (3) anliegenden, antreibbaren Förderscheibe (4) mit über den Umfang verteilten, sich über den radialen Erstreckungsbereich des Führungsschlitzes (16) erstreckenden Mitnehmerschlitzen (21) besteht, die im Überdeckungsbereich mit dem Führungsschlitz (16) Ansaugöffnungen (22) für die entlang des Führungsschlitzes (16) aus dem Saatgutbehälter (14) austragbaren Saatkörner bilden, **dadurch gekennzeichnet, daß** die Schlitzränder (23) der Mitnehmerschlitze einen wellenartigen Verlauf aufweisen, so daß sich die Winkel zwischen den Längsrändern (23, 24) der Mitnehmerschlitze (21) und des Führungsschlitzes (16) im Überdeckungsbereich dieser Schlitze (16, 21) zumindest auf einer Schlitzseite entlang des Führungsschlitzes (16) innerhalb eines vorgegebenen Winkelbereiches wiederholt im Sinne einer Vergrößerung und Verkleinerung ändern.

2. Einzelkornsämaschine nach Anspruch 1, **dadurch gekennzeichnet, daß** die Schlitzränder (23) zur Bildung eines wellenartigen Verlaufes mit randseitigen Vertiefungen (26) versehen sind.

3. Einzelkornsämaschine nach Anspruch 1 oder 2, **dadurch gekennzeichnet, daß** der Führungsschlitz (16) im Scheibenkörper (3) eine geringere Breite als die Mitnehmerschlitze (21) in der Förderscheibe (4) aufweisen.

4. Einzelkomsämaschine nach einem der Ansprüche 1 bis 3, **dadurch gekennzeichnet, daß** im Bereich eines vom Bodenbereich (17) des Saatgutbehälters (14) aufsteigenden Abschnittes des Führungsschlitzes (16) wenigstens eine gegen den Führungsschlitz (16) gerichtete Blasdüse (29) vorgesehen ist.

## Claims

1. A single grain sowing machine with at least one seed container (14) open towards a vertical sowing disc (1), the latter consisting of a fixed disc body (3) to which suction is applied on the side remote from the seed container (14) and which has at least one guide slot (16), and of a drivable feed disc (4) which abuts the disc body (3) on the side of the seed container (14) and which has driver slots (21) which are distributed over the periphery, and which extend over the radial extent of the guide slot (16) and which, in the zone of overlap with the guide slot (16), form suction application openings (22) for the seed grains which can be delivered from the seed container (14) along the guide slot (16), **characterised in that** the edges (23) of the driver slots have a corrugated configuration so that the angles between the longitudinal edges (23, 24) of the driver slots (21) and of the guide slot (16) in the overlap zone of said slots (16, 21) change at least on one slot side along the guide slot (16) within a predetermined angular range repeatedly in the direction of size enlargement and reduction.

2. A single grain sowing machine according to claim 1, **characterised in that** the slot edges (23) are provided with edge recesses (26) to form a corrugated configuration.

3. A single grain sowing machine according to claim 1 or 2, **characterised in that** the guide slot (16) in the disc body (3) has a smaller width than the driver slots (21) in the feed disc (4).

4. A single grain sowing machine according to any one of claims 1 to 3, **characterised in that** in the region of a portion of the guide slot (16) rising from the bottom zone (17) of the seed container (14) there is provided at least one blowing nozzle (29) which is directed towards the guide slot (16).

## Revendications

1. Machine permettant de semer des grains de semence individuels, comprenant au moins un réservoir à semence (14) ouvrant en direction d'un disque semeur (1) vertical, le disque semeur (1) étant formé d'un corps de disque (3) stationnaire, soumis à aspiration sur le côté opposé au réservoir de semence (14), avec au moins une fente de guidage (16), et d'un disque de transport (4) susceptible d'être entraîné, en appui sur le corps de disque (3) du côté du réservoir à semence (14), disque de transport comprenant des fentes d'entraînement (21) réparties sur la périphérie, s'étendant sur la zone d'étendue radiale de la fente de guidage (16), fente d'entraînement formant, dans la zone de recouvrement avec la fente de guidage (16), des ouvertures d'aspiration (22) pour les grains de semence susceptibles d'être expulsés hors du réservoir à semence (14), le long de la fente de guidage (16), **caractérisée en ce que** les bords de fente (23) des fentes d'entraînement présentent une allure ondulée, de manière que les angles entre les bords longitudinaux (23, 24), des fentes d'entraînement (21) et de la fente de guidage (16), dans la zone de recouvrement de ces fentes (16, 21), varient de façon répétée dans le sens d'un agrandissement et d'une diminution, au moins sur un côté de fente, le long de la fente de guidage (16), dans les limites d'une plage angulaire prédéterminée.

2. Machine permettant de semer des grains de semence individuels selon la revendication 1, **caractérisée en ce que** les bords de fente (23) sont munis de creusements (26) situés côté bordure, dans le but de former une allure ondulée.

3. Machine permettant de semer des grains de semence individuels selon la revendication 1 ou 2, **caractérisée en ce que** la fente de guidage (16), réalisée dans le corps de disque (3), présente une largeur inférieure à celle que présentent les fentes d'entraînement (21) ménagées dans le disque de transport (4).

4. Machine permettant de semer des grains de semence individuels selon l'une des revendications 1 à 3, **caractérisée en ce que**, dans la zone d'un tronçon, montant de la zone de fond (17) du réservoir à semence (14), de la fente de guidage (16), est prévue au moins une buse de soufflage (29) orientée vers la fente de guidage (16).
